# EUROPÄISCHE PATENTSCHRIFT

(11) **EP 4 110 658 B1**
(45) Veröffentlichungstag und Bekanntmachung des Hinweises auf die Patenterteilung: **08.05.2024**
(21) Anmeldenummer: 20820400.8
(22) Anmeldetag: 04.12.2020
(51) Int. Cl.: B60S 1/48, B60S 1/54, B05B 1/16, B08B 5/00

(54) **REINIGUNGSVORRICHTUNG**
CLEANING DEVICE
DISPOSITIF DE NETTOYAGE

(30) Priorität: 28.02.2020 DE 102020202571
(43) Veröffentlichungstag der Anmeldung: 04.01.2023
(73) Patentinhaber: Vitesco Technologies GmbH, 93055 Regensburg (DE)
(72) Erfinder: KLÖCKNER, Stefan, 65824 Schwalbach a. Ts (DE); FRITSCH, Karl Martin, 65824 Schwalbach a. Ts (DE)
(74) Vertreter: Vitesco Technologies
(86) Internationale Anmeldenummer: PCT/EP2020/084769
(87) Internationale Veröffentlichungsnummer: WO 2021/170274

(56) Entgegenhaltungen:
- US-A- 3 901 444
- US-A1- 2020 001 331
- US-B2- 9 290 158
- US-B2- 9 538 054

## Beschreibung

Die Erfindung betrifft eine Reinigungsvorrichtung für ein Fahrzeug, ein Fahrzeug mit einer solchen Reinigungsvorrichtung sowie eine Verwendung einer solchen Reinigungsvorrichtung.

Unter einem Fahrzeug ist dabei jede Art von Fahrzeug zu verstehen, welches entweder verbrennungsmotorisch und/oder elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Aus der US 3 901 444 A ist eine Reinigungsvorrichtung für ein Fahrzeug bekannt. Eine der Erfindung zugrunde liegende Aufgabe ist es, eine verbesserte Fahrzeugreinigung zu ermöglichen. Eine weitere der Erfindung zugrunde liegende Aufgabe ist es, eine Reinigungsvorrichtung für ein Fahrzeug zu verbessern.

Diese Aufgabe wird durch eine gemäß Anspruch 1 vorgeschlagene und unter Schutz gestellte Reinigungsvorrichtung gelöst. Es wird ferner ein Fahrzeug mit einer solchen Reinigungsvorrichtung vorgeschlagen und unter Schutz gestellt (vgl.

Anspruch 5). Des Weiteren wird eine Verwendung der vorgeschlagenen Reinigungsvorrichtung vorgeschlagen und unter Schutz gestellt (vgl. Anspruch 6). Vorteilhafte Ausführungsformen der Erfindung sind Gegenstand der Unteransprüche.

Es wird eine Reinigungsvorrichtung für ein Fahrzeug vorgeschlagen, mit welcher zumindest eine Reinigungsstelle des Fahrzeugs bedarfs- und wahlweise mit druckbeaufschlagter Reinigungsflüssigkeit und/oder druckbeaufschlagter Umgebungsluft reinigbar ist.

Die vorgeschlagene Reinigungsvorrichtung umfasst dabei:
- einen Luftpfad, der wahlweise einen Reinigungsflüssigkeitstank und/oder eine Fluidverteilungseinrichtung mit der druckbeaufschlagten Umgebungsluft speist, wobei die Fluidverteilungseinrichtung an die Reinigungsstelle fluidisch angebunden ist, wobei der Reinigungsflüssigkeitstank an die Fluidverteilungseinrichtung zur Vorförderung der druckbeaufschlagten Reinigungsflüssigkeit in die Fluidverteilungseinrichtung über einen Flüssigkeitspfad fluidisch angebunden ist, sowie
- eine Druckluftquelle zur Druckbeaufschlagung des Luftpfades.

Die Druckluftquelle kann dabei eine Verdichter-Stufe zur Ansaugung und Förderung der Umgebungsluft und zur Druckbeaufschlagung des Luftpfades sein. Zusätzlich oder alternativ zur Verdichter-Stufe kann auch ein separates Druckluftsystem im Sinne der Druckluftquelle zur Druckbeaufschlagung des Luftpfades fungieren, welches die druckbeaufschlagte Umgebungsluft bereitstellt.

Unter einer Reinigungsstelle kann dabei eine einem Fahrzeugsensor zugeordnete Reinigungsstelle verstanden werden - etwa eine einer Kamera zugeordnete Reinigungsstelle etc. -, wobei die Reinigungsstelle als solche sogar Teil des jeweiligen Fahrzeugsensors oder beabstandet zu diesem angeordnet sein kann, so zum Beispiel eine Stelle auf einer Windschutzscheibe und dergleichen mehr. Eine Reinigungsstelle kann aber auch eine andere Stelle des Fahrzeugs sein, die als solche keinem Fahrzeugsensor zugeordnet ist, beispielsweise eine weitere Stelle auf der besagten Windschutzscheibe, eine Stelle auf einem Scheinwerfer und dergleichen mehr.

Unter einer Reinigungsflüssigkeit kann dabei im einfachsten Fall Wasser verstanden werden, vorteilhafterweise jedoch eine wässrige Reinigungsmittellösung, d.h. Wasser in Verbindung mit einem Reinigungsmittelzusatz. Die Reinigungsflüssigkeit kann zudem vorteilhafterweise ein Gefrier- bzw. Frostschutzmittel enthalten, welches als solches den Gefrierpunkt der Reinigungsflüssigkeit herabsetzt.

Unter Umgebungsluft kann dabei zusätzlich oder alternativ zur Luft einer tatsächlichen Fahrzeugumgebung auch die Luft eines Fahrzeuginnenraums verstanden werden, bei der es sich um eine zweckmäßigerweise gefilterte und ggf. auch vorgeheizte Luft handelt. Zur Filterung dieser Fahrzeuginnenraumluft kann dabei vorteilhafterweise ein ohnehin schon in einem HVAC-System (Heating, Ventilation and Air Conditioning → dt. Heizung, Lüftung, Klimatechnik) bzw. einer Klimaanlage vorgesehener Luftfilter verwendet werden. Letzteres trägt zu einer Kostenreduktion bei.

Die Verwendung einer solch vorgeheizten und gefilterten Fahrzeuginnenraumluft bzw. Warmluft hat den Vorteil, dass bei kalten Außentemperaturen einer Fahrzeugumgebung einer Einfrierung der Reinigungsflüssigkeit auf der jeweiligen Reinigungsstelle entgegengewirkt wird, etwa auf einer Reinigungsstelle, die einer Sensoroptik zugeordnet sein kann. Zudem erweist sich diese Warmluft als vorteilhaft zur Trocknung und Enteisung der jeweiligen Reinigungsstelle.

Indem die Druckluftquelle, etwa in Gestalt der besagten Verdichter-Stufe den Reinigungsflüssigkeitstank speist, bewirkt sie auch die besagte Vorförderung der druckbeaufschlagten Reinigungsflüssigkeit in die Fluidverteilungseinrichtung. Es entfällt somit vorteilhafterweise eine weitere, separat flüssigkeitsfördernde Komponente bzw. Pumpenstufe. Somit vereinfacht sich auch die Steuerung einer solchen Reinigungsvorrichtung, weil weniger Komponenten anzusteuern sind.

Die vorgeschlagene Reinigungsvorrichtung reduziert somit die Anzahl der erforderlichen Komponenten einer solchen Vorrichtung. Sie vereinfacht somit eine solche Vorrichtung. Dadurch reduzieren sich auch die Kosten einer solchen Reinigungsvorrichtung.

Für stromabwärts der Fluidverteilungseinrichtung angeordnete, Umgebungsluft- und/oder Reinigungsflüssigkeit führende bzw. leitende Fluidleitungen, die zu den einzelnen Reinigungsstellen führen, gilt dabei, dass, der jeweilige zuvor von der Reinigungsflüssigkeit durchströmte Fluidpfad bzw. Luft- und Flüssigkeitspfad von der durchströmenden Umgebungsluft getrocknet bzw. freigeblasen wird.

Dadurch kann der jeweilige Fluidpfad, der infolge der Umgebungsluftförderung freigeblasen wird, vorteilhafterweise nicht einfrieren.

Ferner wird durch die Umgebungsluftförderung auch der Entstehung einer Biomasse im Fluidpfad entgegengewirkt und somit auch einer dadurch bedingten Faulung des Fluidpfads. Idealerweise werden sowohl die Entstehung der Biomasse als auch die Faulung gänzlich unterbunden.

Ferner wird mittels der vorgeschlagenen Reinigungsvorrichtung eine Reichweite einer verwendeten Menge an Reinigungsflüssigkeit gegenüber einer Vorrichtung, die als solche nur Reinigungsflüssigkeit fördert, signifikant erhöht bzw. gesteigert.

Indem der mindestens einen Reinigungsstelle über die Fluidverteilungseinrichtung - entsprechend der zuvor beschriebenen "und/oder-Verknüpfung" - in einem sogenannten Mischmodus sogar Reinigungsflüssigkeit und Umgebungsluft gleichzeitig zugeführt werden, kann die besagte Reichweite der Reinigungsflüssigkeit vorteilhafterweise noch weiter erhöht bzw. gesteigert werden (sog. Mischmodus der Reinigungsvorrichtung).

Erfindungsgemäß sind an einer Verzweigungsstelle des Luftpfades zwischen dem Reinigungsflüssigkeitstank und der Fluidverteilungseinrichtung - stromaufwärts des Reinigungsflüssigkeitstanks und der Fluidverteilungseinrichtung Absperr- und Freigabemittel vorgesehen, welche die druckbeaufschlagte Umgebungsluft wahlweise in den Reinigungsflüssigkeitstank und/oder die Fluidverteilungseinrichtung leiten.

Diese Absperr- und Freigabemittel sind dabei in Gestalt eines verstellbaren Mehrwegeventils ausgebildet.

Es wird zudem vorgeschlagen, stromabwärts der Verdichter-Stufe einen Druckluftspeicher vorzusehen.

Es wird ferner vorgeschlagen, die Verdichter-Stufe elektrisch anzutreiben. Die Verdichter-Stufe kann dabei in Gestalt einer Verdrängungsverdichterstufe und/oder Strömungsverdichterstufe ausgebildet sein.

Es wird ferner ein Fahrzeug mit einer Reinigungsvorrichtung der zuvor beschriebenen Art vorgeschlagen.

Des Weiteren wird ein nicht beanspruchtes Reinigungsverfahren für ein Fahrzeug vorgeschlagen, bei dem zumindest eine Reinigungsstelle bedarfs- und wahlweise mit druckbeaufschlagter Reinigungsflüssigkeit und/oder druckbeaufschlagter Umgebungsluft gereinigt wird.

Dabei wird/werden mittels der besagten Druckluftquelle über einen Luftpfad wahlweise ein Reinigungsflüssigkeitstank und/oder eine Fluidverteilungseinrichtung, welche an die Reinigungsstelle fluidisch angebunden ist, mit der druckbeaufschlagten Umgebungsluft gespeist.

Der Reinigungsflüssigkeitstank wird dabei ferner an die Fluidverteilungseinrichtung zur Vorförderung der druckbeaufschlagten Reinigungsflüssigkeit in die Fluidverteilungseinrichtung über einen Flüssigkeitspfad fluidisch angebunden.

Zudem wird eine Verwendung einer Reinigungsvorrichtung der zuvor beschriebenen Art zur zumindest Reinigung einer Mehrzahl von jeweils einem Sensor zugeordneten Reinigungsstellen vorgeschlagen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen schematisch:
- Fig. 1: eine erste Ausführung einer vorgeschlagenen, erfindungsgemäßen Reinigungsvorrichtung und
- Fig. 2: eine *zweite* Ausführung einer vorgeschlagenen, erfindungsgemäßen Reinigungsvorrichtung.

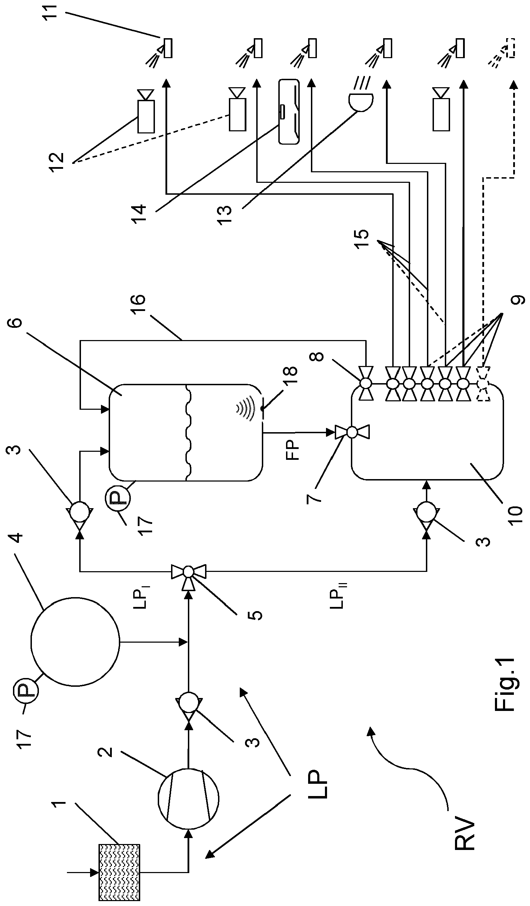

Die vorgeschlagene Reinigungsvorrichtung RV nach Fig. 1 weist einen Verdichter 2, auch als Verdichter-Stufe 2 bezeichnet, als Teil einer eine Umgebungsluft fördernden Einheit auf, wobei die Einheit zudem einen Elektromotor umfasst, welcher den Verdichter 2 über eine entsprechende Welle antreibt.

Die Umgebungsluft wird dabei stromaufwärts des Verdichters 2 über einen Luftfilter 1 und einen zugeordneten Fluidpfad- bzw. Luftpfadabschnitt angesaugt und gefördert. Der Verdichter 2 kann dabei in Gestalt einer Verdrängungs- und/oder Strömungsverdichter-Stufe ausgebildet sein.

In Sachen der gefilterten Umgebungsluft sei darauf hingewiesen, dass es sich entweder um eine aus einer Fahrzeugumgebung und/oder eine aus einem Fahrzeuginnerraum angesaugte Luft handeln kann (vgl. dazu auch die einleitende Definition der Umgebungsluft).

Stromabwärts des Verdichters 2, in der Fortsetzung des Luftpfades LP, ist ein Rückschlagventil 3 angeordnet sowie ein Druckluftspeicher 4, dessen Druck mittels eines Drucksensors 17 überwacht wird. Stromabwärts des Druckluftspeichers 4 ist ein Verteilerventil 5 angeordnet, über welches druckbeaufschlagte bzw. verdichtete Umgebungsluft bedarfs- und wahlweise einem Reinigungsflüssigkeitstank 6 und/oder einer Fluidverteilungseinrichtung 10 zuführbar ist. Das Verteilerventil 5 stellt zugleich einen Verzweigungspunkt bzw. Gabelungspunkt dar, an dem der Luftpfad LP stromabwärts des Verdichters 2 und des Druckluftspeichers 4 einerseits in einen ersten, in die Fluidverteilungseinrichtung 10 mündenden Luftpfadabschnitt LP_{I} sowie andererseits in einen zweiten, in den Reinigungsflüssigkeitstank 6 mündenden Luftpfadabschnitt LP_{II} auseinander geht.

In einer weiteren Ausführung kann zusätzlich oder alternativ zum Verdichter 2 und/oder dem Druckluftspeicher 4 ein im Fahrzeug verbautes, separates Druckluftsystem im Sinne einer alternativen Druckluftquelle zum Einsatz kommen, welches als solches druckbeaufschlagte bzw. verdichtete Luft bzw. Umgebungsluft bereitstellt.

Im letzteren Fall bedient man sich beispielsweise eines separaten Druckluftspeichers eines bspw. Fahrzeugluftfederungs- oder Fahrzeugbremssystems, die als solche jeweils einen separaten Druckluftspeicher aufweisen. Dadurch ließen sich der Verdichter 2 und auch der Druckluftspeicher 4 vorteilhafterweise einsparen.

Zwischen dem Verteilerventil 5 und dem Reinigungsflüssigkeitstank 6 sowie zwischen dem Verteilerventil 5 und der Fluidverteilungseinrichtung 10 ist jeweils ein weiteres Rückschlagventil 3 angeordnet. Auch der Druck innerhalb des mit der verdichteten Umgebungsluft gespeisten Reinigungsflüssigkeitstanks 6 wird mittels eines zugeordneten, weiteren Drucksensors 17 überwacht. Zur Füllstandsmessung des Tanks 6 ist ein Füllstandsensor 18 vorgesehen.

Zudem ist der Reinigungsflüssigkeitstank 6 über einen die Reinigungsflüssigkeit führenden/leitenden, separaten Fluid- bzw. Flüssigkeitspfad FP an die Fluidverteilungseinrichtung 10 fluidisch angebunden, und zwar über ein zugeordnetes Einlass-Drosselventil 7, wobei das Einlass-Drosselventil 7 beispielsweise an der Fluidverteilungseinrichtung 10 vorgesehen sein kann. Alternativ dazu kann das Einlass-Drosselventil 7 auch am Reinigungsflüssigkeitstank 6 oder in der zugeordneten Leitung vorgesehen sein.

Zudem weist die Ausführung nach Fig. 1 einen sog. Rücklaufpfad 16 auf, oder auch nur Rücklauf 16 genannt, über welchen von der Fluidverteilungseinrichtung 10 über ein Rückstromventil 8 sowohl druckbeaufschlagte Reinigungsflüssigkeit und/oder druckbeaufschlagte bzw. verdichtete Umgebungsluft dem Reinigungsflüssigkeitstank 6 rückgeführt werden können.

An der Fluidverteilungseinrichtung 10 sind ferner eine Vielzahl bzw. Mehrzahl von Auslass-Dosierventilen 9 vorgesehen, welche jeweils über eine zugeordnete Fluidleitung 15 an eine einer Reinigungsstelle 12, 13, 14 zugeordnete Düse 11 fluidisch angebunden sind.

Über die Fluidverteilungseinrichtung 10 wird wahlweise und bedarfsweise das jeweilige Reinigungsmedium bzw. -fluid - d.h. druckbeaufschlagte Reinigungsflüssigkeit und/oder druckbeaufschlagte Umgebungsluft - einer Vielzahl bzw. Mehrzahl von möglichen Reinigungsstellen 12, 13, 14 eines Fahrzeugs zugeführt. Dabei kann es sich um jeweils einem Fahrzeugsensor zugeordnete Reinigungsstellen 12 handeln - etwa eine einer Kamera zugeordnete Reinigungsstelle auf einer Windschutzscheibe 14 etc. - und/oder andere Reinigungsstellen, etwa eine weitere Stelle auf der Windschutzscheibe 14, eine Stelle eines Scheinwerfers 13 und dergleichen mehr.

Nach einer weiteren, alternativ vorgeschlagenen Ausführung, die durch die Figuren nicht abgedeckt ist, ist die Reinigungsvorrichtung RV ohne einen Rücklauf 16, d.h. rücklauflos ausgeführt. Dabei kann stattdessen sowie anstelle des Rückstromventils 8 ein Entlüftungsventil 21, etwa an der Fluidverteilungseinrichtung 10 vorgesehen sein. Das Entlüftungsventil 21 kann dabei vorteilhafterweise gasdurchlässig, aber nicht flüssigkeitsdurchlässig ausgeführt sein.

Auch wird eine alternative Ausführung ohne den Druckluftspeicher 4 vorgeschlagen, die durch die Figuren nicht abgedeckt ist. Der Vorteil eines solchen Druckluftspeichers 4 liegt darin, dass der Verdichter 2 nur zweitweise bzw. bedarfsweise in Betrieb genommen werden muss, um entweder den Druckluftspeicher 4 zu dessen Auffüllung zu speisen und/oder den Fluid- bzw. Luftpfadabschnitt LP, LP_{I}, LP_{II} stromabwärts des Druckluftspeichers 4 mit verdichteter Umgebungsluft zu beaufschlagen. Insofern ist diese Ausführung ohne den Druckluftspeicher 4 aus energetischer Sicht vorteilhafter.

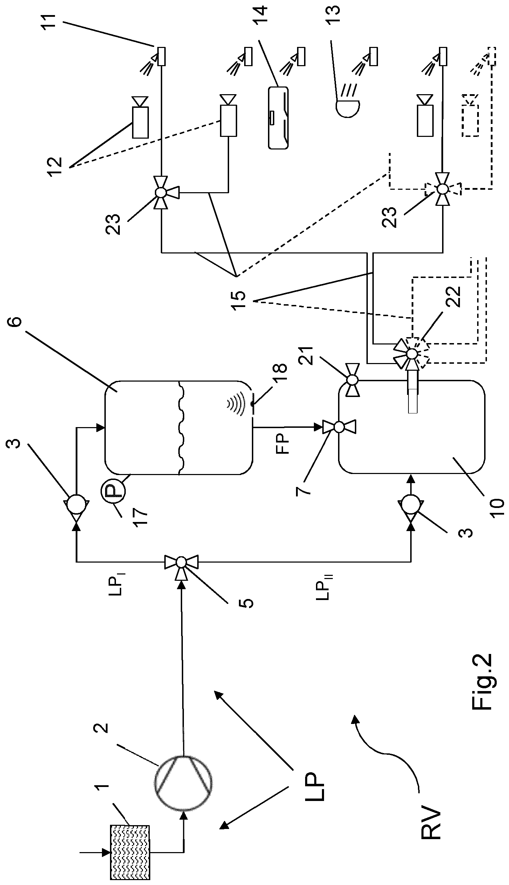

Die Ausführung nach Fig. 2 zeigt eine rücklauflose Reinigungsvorrichtung RV mit dem besagten Entlüftungsventil 21 an der Fluidverteilungseinrichtung 10. Dabei kommt stromabwärts der Fluidverteilungseinrichtung 10 ein Verteilerventil bzw. Mehrwegeventil 22 zum Einsatz, welches die zuvor genannten Auslass-Dosierventile 9 (vgl. Fig. 1) ersetzt.

Über dieses Verteilerventil 22 wird wahlweise und bedarfsweise das jeweilige Reinigungsmedium bzw. -fluid - d.h. druckbeaufschlagte Reinigungsflüssigkeit und/oder druckbeaufschlagte Umgebungsluft - den einzelnen Reinigungsstellen 12, 13, 14 über je eine zugeordnete Fluidleitung 15 sowie eine zugeordnete Düse 14 zugeführt.

Stromabwärts des Verteilerventils 22 sind dabei mindestens zwei weitere Verteilerventile bzw. Mehrwegeventile 23 vorgesehen, um eine entsprechende Vielzahl von Reinigungsstellen 12, 13, 14 versorgen bzw. abdecken zu können.

Die Reinigungsvorrichtung RV ist dabei Teil eines Fahrzeugs, vorzugsweise in Gestalt eines zumindest teilautonom, insbesondere aber vollautonom betriebenen Fahrzeugs.

Mittels der Reinigungsvorrichtung RV kann somit bedarfs- und wahlweise entweder die besagte Reinigungsflüssigkeit und/oder die besagte Umgebungsluft druckbeaufschlagt zumindest einer der genannten Reinigungsstellen 12, 13, 14 zugeführt werden.

Durch die vorgeschlagene Reinigungsvorrichtung RV entfällt die Notwendigkeit zweier separater Fluidfördereinheiten. Folglich reduziert die vorgeschlagene Reinigungsvorrichtung RV die Anzahl der erforderlichen Komponenten einer solchen Vorrichtung und somit auch die Kosten der Vorrichtung.

Diese Reduktion von Vorrichtungskomponenten begünstigt auch eine entsprechende Kompaktheit einer solchen Vorrichtung, so dass auch insgesamt weniger Bauraum benötigt wird.

Gegenüber einer lediglich eine Reinigungsflüssigkeit fördernden Reinigungsvorrichtung lässt sich erfindungsgemäß die mit der Reinigungsflüssigkeit des Reinigungsflüssigkeitsbehälters 6 erreichbare Reichweite signifikant erhöhen bzw. steigern.

Insbesondere gilt dies für zukünftig vollautonom fahrende Fahrzeuge, die gegenüber bisherigen Fahrzeugen eine signifikant höhere Anzahl an Sensoren, insbesondere sicherheitsrelevanten Sensoren aufweisen werden, deren Funktionsfähigkeit sichergestellt werden muss.

## Patentansprüche

1. Reinigungsvorrichtung für ein Fahrzeug, mit welcher zumindest eine Reinigungsstelle (12, 13, 14) bedarfs- und wahlweise mit druckbeaufschlagter Reinigungsflüssigkeit und/oder druckbeaufschlagter Umgebungsluft reinigbar ist, umfassend:
einen Luftpfad (LP, LP_{I}, LP_{II}), der wahlweise einen Reinigungsflüssigkeitstank (6) und/oder eine Fluidverteilungseinrichtung (10) mit der druckbeaufschlagten Umgebungsluft speist, wobei die Fluidverteilungseinrichtung (10) an die Reinigungsstelle (12, 13, 14) fluidisch angebunden ist,
wobei der Reinigungsflüssigkeitstank (6) an die Fluidverteilungseinrichtung (10) zur Vorförderung der druckbeaufschlagten Reinigungsflüssigkeit in die Fluidverteilungseinrichtung über einen Flüssigkeitspfad (FP) fluidisch angebunden ist, sowie
eine Druckluftquelle zur Druckbeaufschlagung des Luftpfades (LP, LP_{I}, LP_{II}),
**dadurch gekennzeichnet, dass** an einer Verzweigungsstelle des Luftpfades (LP, LP_{I}, LP_{II}) zwischen dem Reinigungsflüssigkeitstank (6) und der Fluidverteilungseinrichtung (10) Absperr- und Freigabemittel vorgesehen sind, welche die druckbeaufschlagte Umgebungsluft wahlweise in den Reinigungsflüssigkeitstank (6) und/oder die Fluidverteilungseinrichtung (10) leiten, wobei die Absperr- und Freigabemittel in Gestalt eines verstellbaren Mehrwegeventils (5) ausgebildet sind.

2. Reinigungsvorrichtung nach Anspruch 1, wobei die Druckluftquelle eine Verdichter-Stufe (2) zur Ansaugung und Förderung der Umgebungsluft und zur Druckbeaufschlagung des Luftpfades (LP, LP_{I}, LP_{II}) und/oder ein separates Druckluftsystem des Fahrzeugs zur Druckbeaufschlagung des Luftpfades (LP, LP_{I}, LP_{II}) ist.

3. Reinigungsvorrichtung nach einem der vorhergehenden Ansprüche, wobei stromabwärts der Druckluftquelle ein Druckluftspeicher (4) angeordnet ist.

4. Reinigungsvorrichtung nach einem der vorhergehenden Ansprüche 2 bis 3, wobei die Verdichter-Stufe (2) elektrisch angetrieben ist.

5. Fahrzeug mit einer Reinigungsvorrichtung nach einem der vorhergehenden Ansprüche.

6. Verwendung einer Reinigungsvorrichtung nach einem der vorhergehenden Ansprüche 1 bis 4 zur zumindest Reinigung einer Mehrzahl von jeweils einem Sensor (12) zugeordneten Reinigungsstellen.

## Claims

1. Cleaning device for a vehicle, with which at least one cleaning location (12, 13, 14) can be cleaned as needed and selectively with pressurized cleaning liquid and/or pressurized ambient air, comprising:
an air path (LP, LP_{I}, LP_{II}), which feeds the pressurized ambient air selectively to a cleaning liquid tank (6) and/or to a fluid distribution device (10), the fluid distribution device (10) being fluidically connected to the cleaning location (12, 13, 14),
the cleaning liquid tank (6) being fluidically connected to the fluid distribution device (10) for the preconveyance of the pressurized cleaning liquid into the fluid distribution device via a liquid path (FP), and
a compressed-air source for pressurizing the air path (LP, LP_{I}, LP_{II}),
**characterized in that**, at a branch point of the air path (LP, LP_{I}, LP_{II}) between the cleaning liquid tank (6) and the fluid distribution device (10), shut-off and release means are provided which lead the pressurized ambient air selectively into the cleaning liquid tank (6) and/or the fluid distribution device (10), wherein the shut-off and release means are designed in the form of an adjustable multi-way valve (5).

2. Cleaning device according to Claim 1, wherein the compressed-air source is a compressor stage (2) for sucking in and conveying the ambient air and for pressurizing the air path (LP, LP_{I}, LP_{II}), and/or a separate compressed-air system of the vehicle for pressurizing the air path (LP, LP_{I}, LP_{II}).

3. Cleaning device according to one of the preceding claims, wherein a compressed-air reservoir (4) is arranged downstream of the compressed-air source.

4. Cleaning device according to either of Claims 2 and 3, wherein the compressor stage (2) is driven electrically.

5. Vehicle having a cleaning device according to one of the preceding claims.

6. Use of a cleaning device according to one of Claims 1 to 4 for at least cleaning a plurality of cleaning locations each assigned to a sensor (12).

## Revendications

1. Dispositif de nettoyage pour un véhicule, avec lequel au moins un emplacement de nettoyage (12, 13, 14) peut être nettoyé selon les besoins et sélectivement avec un liquide de nettoyage sous pression et/ou de l'air ambiant sous pression, comprenant :
un trajet d'air (LP, LP_{I}, LP_{II}) qui alimente sélectivement un réservoir de liquide de nettoyage (6) et/ou un appareil de distribution de fluide (10) avec l'air ambiant sous pression, l'appareil de distribution de fluide (10) étant raccordé fluidiquement à l'emplacement de nettoyage (12, 13, 14),
le réservoir de liquide de nettoyage (6) étant raccordé fluidiquement à l'appareil de distribution de fluide (10) pour pré-transporter le liquide de nettoyage sous pression dans l'appareil de distribution de fluide via un trajet de liquide (FP), ainsi que
une source d'air comprimé pour mettre sous pression le trajet d'air (LP, LP_{I}, LP_{II}),
**caractérisé en ce que** des moyens d'arrêt et de libération sont prévus à un emplacement de bifurcation du trajet d'air (LP, LP_{I}, LP_{II}) entre le réservoir de liquide de nettoyage (6) et l'appareil de distribution de fluide (10), lesquels guident l'air ambiant sous pression sélectivement dans le réservoir de liquide de nettoyage (6) et/ou l'appareil de distribution de fluide (10), les moyens d'arrêt et de libération étant réalisés sous la forme d'une soupape à plusieurs voies réglable (5).

2. Dispositif de nettoyage selon la revendication 1, dans lequel la source d'air comprimé est un étage de compresseur (2) destiné à aspirer et à refouler l'air ambiant et à mettre sous pression le trajet d'air (LP, LP_{I}, LP_{II}) et/ou un système d'air comprimé séparé du véhicule destiné à mettre sous pression le trajet d'air (LP, LP_{I}, LP_{II}).

3. Dispositif de nettoyage selon l'une quelconque des revendications précédentes, dans lequel un réservoir d'air comprimé (4) est agencé en aval de la source d'air comprimé.

4. Dispositif de nettoyage selon l'une quelconque des revendications 2 à 3 précédentes, dans lequel l'étage de compresseur (2) est entraîné électriquement.

5. Véhicule avec un dispositif de nettoyage selon l'une quelconque des revendications précédentes.

6. Utilisation d'un dispositif de nettoyage selon l'une quelconque des revendications précédentes 1 à 4 pour au moins nettoyer une pluralité d'emplacements de nettoyage associés chacun à un capteur (12).
